# EUROPÄISCHE PATENTSCHRIFT

(11) **EP 3 694 688 B1**
(45) Veröffentlichungstag und Bekanntmachung des Hinweises auf die Patenterteilung: **19.05.2021**
(21) Anmeldenummer: 18807848.9
(22) Anmeldetag: 09.10.2018
(51) Int. Cl.: B25J 9/08, B25J 15/04, G05B 19/00

(54) **ADAPTERSYSTEM ZUR ANBINDUNG DES LETZTEN GLIEDES EINER KINEMATISCHEN KETTE AN EINE HANDHABUNGSVORRICHTUNG**
ADAPTER SYSTEM FOR CONNECTING THE LAST ELEMENT OF A KINEMATIC CHAIN TO A HANDLING DEVICE
SYSTÈME D'ADAPTATEURS POUR LA CONNEXION DU DERNIER MAILLON D'UNE CHAÎNE CINÉMATIQUE À UN DISPOSITIF DE MANIPULATION

(30) Priorität: 09.10.2017 DE 102017009319
(43) Veröffentlichungstag der Anmeldung: 19.08.2020
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2018/000287
(87) Internationale Veröffentlichungsnummer: WO 2019/072330

(56) Entgegenhaltungen:
- EP-A1- 3 135 443
- US-A1- 2005 065 647
- Zimmer Group: "Handling Technology construction kit for YASKAWA-Robots", , 6. Oktober 2017 (2017-10-06), XP055547091, Gefunden im Internet: URL:http://www.zimmer-group.de/downloads/h ht/mkt000062-01_br-hht-yaskawa_-sen_-ain_- v2.pdf [gefunden am 2019-01-24]

## Beschreibung

Die Erfindung betrifft ein Adaptersystem zur Anbindung des letzten Gliedes einer kinematischen Kette einer Handhabungsvorrichtung an diese, wobei das letzte Glied ein Rechner- und Speichermodul sowie mindestens einen Aktor und/oder mindestens einen Sensor aufweist.

Solche Adaptersysteme sind in dem 2017 veröffentlichten Katalog der Anmelderin "Handling Technology construction kit for YASKAWA-Robots" offenbart.

Die Handhabungsvorrichtung ist in Kombination mit dem letzten Glied beispielsweise ein mehrgliedriger 6-Achs-Roboter, der einen Parallelgreifer trägt.

Aus der DE 10 2015 012 779 A1 ist ein derartiger Parallelgreifer zum mechanischen Greifen von Werkstücken bekannt. Die Greifarme des Greifers werden von einem elektromechanischen Antrieb angetrieben. Der im Greifergehäuse sitzende Antriebsmotor wird über eine entfernt von der Greifvorrichtung angeordnete speicherprogrammierbare Steuerung gesteuert. Im Greifergehäuse ist dazu eine Datenschnittstelle für eine Punkt-zu-Punkt-Kommunikation mit der speicherprogrammierbaren Steuerung angeordnet. Ferner ist im Greifergehäuse mindestens eine Rechner- und Speichereinheit für die Anwendungssoftware des Greifers und ein Servoregler platziert. Letzterer weist einen geschlossenen Kaskadenregler, die Ansteuerung des Antriebsmotors und eine Geberschnittstelle für einen Drehgeber auf.

Ein derartiger intelligenter Aktor weist in der Regel auch intelligente Sensoren auf. Der einzelne Sensor besteht aus einem Basissensor, einer Auswerteelektronik und mindestens einer Kommunikationsschnittstelle. Der Aktor und die Sensoren haben jeweils Schnittstellen, die in der Automatisierungsumgebung des Handhabungsgeräts in der Regel in eine vorhandene Systemarchitektur integriert werden müssen. Innerhalb der Architektur ziehen sich durch mehr oder weniger harmonisierte Automatisierungsebenen verschiedene Hardwareplattformen, die sich vom Sensor- und/oder Aktorbus über den Feldbus und den Fabrikbus bis hin zur Leitebene erstrecken.

Der vorliegenden Erfindung liegt die Problemstellung zugrunde, ein Adaptersystem zur Anbindung des letzten Gliedes einer kinematischen Kette einer Handhabungsvorrichtung an diese zu schaffen, mit dem das mit Aktoren und Sensoren ausgestattete letzte Glied der kinematischen Kette in jede Systemarchitektur der steuernden und regelnden Hintergrundsoft- und -hardware integrierbar ist.

Diese Problemstellung wird mit den Merkmalen des Hauptanspruchs gelöst. Dabei sind zwischen dem vorletzten und dem letzten Glied der kinematischen Kette mindestens drei nacheinander positionierte Systemmodule angeordnet. Ein erstes Systemmodul ist ein an das vorletzte Glied mechanisch angepasstes Mechanikmodul, durch das elektrische und/oder pneumatische Verbindungsleitungen geführt sind. In einem zweiten Systemmodul sind die elektrischen und/oder pneumatischen Verbindungsleitungen mit Übergabestellen einer negativen Adaptergeometrie einer mechatronischen Kombischnittstelle verbunden. Zwischen dem zweiten Systemmodul und dem letzten Glied ist mindestens ein weiteres Systemmodul angeordnet, wobei dieses Systemmodul wie jedes weitere Systemmodul zur Verbindung mit einem vorherigen Systemmodul eine positive Adaptergeometrie und zur Verbindung mit einem nachfolgenden Systemmodul mindestens eine negative Adaptergeometrie aufweist. In der einzelnen Kombischnittstelle sind die einander kontaktierenden negativen und positiven Adaptergeometrien komplementär zueinander ausgestaltet. Die negativen und die positiven Adaptergeometrien sind mittels einer Kupplungsvorrichtung gegeneinander verdreh- und verliersicher sowie formsteif verbindbar. Ein drittes Systemmodul weist eine Elektronikbaugruppe auf, die die mit der vorgegebenen Systemarchitektur auszutauschenden Kommunikationsdaten der ankommenden elektrischen Verbindungsleitungen für die Kommunikation mit der Geräteschnittstelle des letzten Gliedes anpasst oder wandelt und über die entsprechenden Übergabestellen der negativen Adaptergeometrie kommunizierbar zur Verfügung stellt.

Die einzelnen Systemmodule sind mehrschichtig hintereinander angeordnet und in der Reihenfolge teilweise beliebig vertauschbar. Da im Kommunikationsmodul ein IO-Link-Master für vier Ports eingebaut ist, besteht die Möglichkeit, ein Systemmodul mit mehreren Verzweigungen zur Verfügung zu stellen. Dabei hat dieses Systemmodul an seiner Oberseite eine positive Adaptergeometrie und in seinem unteren Bereich zwei bis vier negative Adaptergeometrien. Die Anschlussebenen der negativen Adaptergeometrien können z.B. nebeneinader oder auf einem Kreis in einer Ebene liegen. In einer anderen Ausführungsform liegen die Normalen der Anschlussebenen z.B. auf einem Kegelmantel.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht einer Handhabungsvorrichtung mit einem über ein Adaptersystem adaptierten Greifer;
- Figur 2:: perspektivische Explosionsansicht des Adaptersystems zusammen mit dem Greifer nach Figur 1 von schräg oben;
- Figur 3:: vergrößerte Ansicht des positiven Adapterelements der Kombischnittstelle;
- Figur 4:: perspektivische Explosionsansicht des Adaptersystems zusammen mit dem Greifer nach Figur 1 von schräg unten;
- Figur 5:: vergrößerte Ansicht des negativen Adapterelements der Kombischnittstelle;
- Figur 6:: Seitenansicht der Kombination aus Greifer und Kommunikationsmodul;
- Figur 7:: Längsschnitt zu Figur 6.

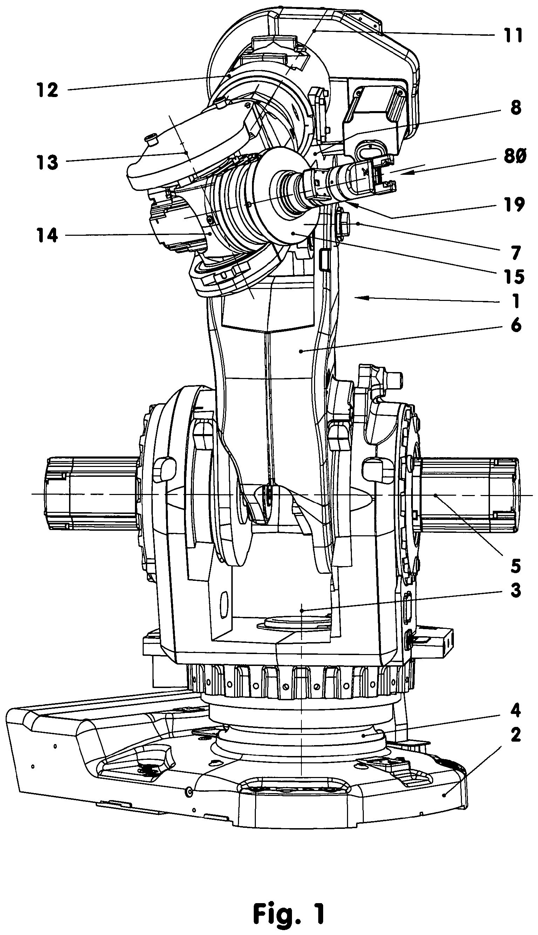

Die Figur 1 zeigt eine als Gelenkroboter ausgebildete Handhabungsvorrichtung (1) mit einer sogenannten RRR-Kinematik. Die serielle kinematische Struktur des Gelenkroboters (1) hat drei rotatorische Hauptachsen und drei rotatorische Nebenachsen. Die Hauptachsen stellen die A-Achse (3), die B-Achse (5) und die C-Achse (7) dar. Die A-Achse (3) ist ein Drehtisch (4) mit vertikaler Rotationsachse, der auf der Grundplatte (1) der Handhabungsvorrichtung gelagert ist. Der Drehtisch (4) lagert als erstes Kinematikkettenglied einen um die horizontale B-Achse (5) - um z.B. 210 Winkelgrade - schwenkbaren Fußhebel (6). Am freien Ende des Fußhebels (6) sitzt als Gelenk mit ebenfalls horizontaler Schwenkachse die C-Achse (7), die den Kniehebel (8) trägt. Der Kniehebel (8) ist gegenüber dem Fußhebel (6) um z.B. 270 Winkelgrade schwenkbar.

Die erste Nebenachse, die D-Achse (11), ist eine Rotationsachse. Sie besteht aus einem um seine Längsachse drehbaren Tragarm (12), der am freien Ende des Kniehebels (8) gelagert ist. Die zweite Nebenachse ist die E-Achse (13), um die der Handhebel (14) um z.B. 270 Winkelgrade schwenkbar gelagert ist. Der Handhebel (14) trägt einen um 360 Winkelgrade schwenkbaren Drehteller, der um die F-Achse (16) rotierbar gelagert ist. Der Drehteller ist das vorletzte Glied (15) der Kinematikkette. An ihm ist das Adaptersystem (19) zusammen mit dem Greifer (80) befestigt.

Durch eine entsprechend koordinierte Ansteuerung der einzelnen Achsen (3, 5, 7, 11, 13, 16) kann nahezu jede beliebig im Arbeitsraum des Gelenkroboters (10) gelegene gerade Strecke oder gekrümmte Bahnkurve abgefahren werden. Das lässt sich auch mit Handhabungsgeräten realisieren, die auf einem kartesischen, einem zylindrischen oder einem Polarroboter basieren. Die Roboter verfügen dann entsprechend über eine TTT-, RTT- oder RRT-Kinematik. Hierbei steht das "T" für translatorische und das "R" für rotatorische Hauptachsen bzw. Führungen.

Anstelle dieser Roboter kann auch ein Handhabungsgerät benutzt werden, das statt der seriellen Struktur eine parallele oder hybride Struktur aufweist. Als parallele Strukturen können Tripode, Pentapode oder Hexapode verwendet werden.

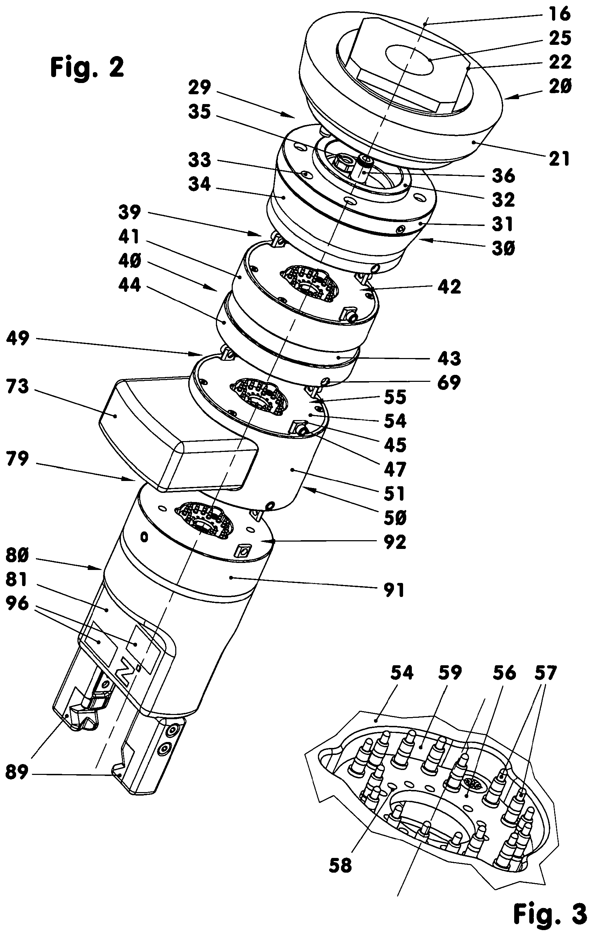

In der Figur 2 ist eine perspektivische Explosionsansicht des Adaptersystems (19) zusammen mit einem Greifer (80) von schräg oben betrachtet dargestellt. Das Adaptersystem (19) umfasst im Ausführungsbeispiel vier hintereinander angeordnete Module. Diese sind der Reihe nach ein Mechanikmodul (20), ein Anschlussmodul (30), ein Verformungsmodul (40) und ein Kommunikationsmodul (50) .

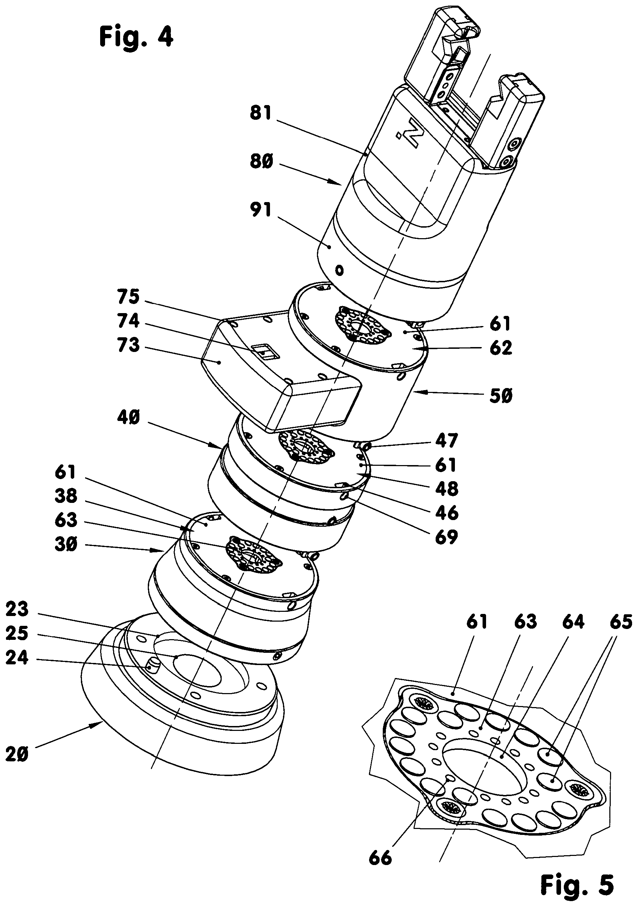

Das Mechanikmodul (20) hat ein zumindest bereichsweise kegelstumpfmantelförmiges Basismodulgehäuse (21), über das es am Drehteller (15) starr befestigt ist. Dazu hat das Basismodulgehäuse (21) an seiner Oberseite einen großen Vierkantzapfen (22), der im Drehteller (15) in eine entsprechende Aussparung formschlüssig eingreift. Nach Figur 4 hat das Mechanikmodul (20) in seiner Unterseite eine große Zentriersenkung (23). Zwischen dem äußeren Rand des Basismodulgehäuses (21) und der Zentriersenkung (23) ist zur Verdrehsicherung gegenüber einem anbaubaren Folgemodul ein Zentrierzapfen (24) angeordnet. Die Ober- und die Unterseite des Basismodulgehäuses (21) sind durch eine zentrale Durchgangsbohrung (25) miteinander verbunden. Durch die Durchgangsbohrung (25) hindurch wird - hier nicht dargestellt - ein Pneumatikschlauch sowie ein Kabelbündel aus einer Vielzahl von Adern und Litzen geführt.

Das Mechanikmodul (20) bildet mit dem Folgemodul, dem Anschlussmodul (30), eine Mechanikschnittstelle (29). Das Anschlussmodul (30) hat ein ebenfalls bereichsweise kegelstumpfmantelförmiges Anschlussgehäuse (31). Auch hier ist, wie beim Basismodulgehäuse (21), der größere Durchmesser des Anschlussgehäuses (31) zum Drehteller (15) hin orientiert. Nach Figur 2 hat die Oberseite des Anschlussgehäuses (31) einen erhabenen umlaufenden Zentrierbund (32), in dessen Inneren sich eine größere Vertiefung befindet. Im Zentrum der Vertiefung ist ein Zulaufrohr (36) für die Zuführung von Druckluft angeordnet. Links neben dem Zulaufrohr (36) befindet sich eine Kabelklemme (35), über die das oben genannte Kabelbündel im Mechanikmodul (20) zugfest arretiert wird.
Zwischen dem äußeren Rand des Anschlussgehäuses (31) und dem Zentrierbund (32) ist eine Passstiftbohrung (33) angeordnet, in die beim Herstellen der Mechanikschnittstelle (29) der Zentrierzapfen (24) des Mechanikmoduls (20) zentrierend hineinragt.

Gemäß der Figur 4 ist in der Unterseite des Anschlussmoduls (30) ein im Wesentlichen runder, z.B. zentraler Deckel (61) eingesetzt, in dessen Zentrum eine Plättchenträgerplatte (63) angeordnet und mit drei Schrauben befestigt ist. Die Unterseite bildet zusammen mit dem Deckel (61) und der Plättchenträgerplatte (63) eine negative Adaptergeometrie (38).

Die Plättchenträgerplatte (63) ist in Figur 5 gesondert dargestellt. Sie sitzt dabei in der Ausnehmung ihres Deckels (61). Die Plättchenträgerplatte (63) hat in ihrem Zentrum eine Bohrung (64), in die mit großem Abstand das Zulaufrohr (60) des jeweiligen Folgemoduls hineinragt. Um die Bohrung (64) herum sind z.B. 16 Kontaktplättchen (65) angeordnet. Dreizehn Kontaktplättchen (65) liegen dabei auf einem größeren Kreis, verteilt in drei Gruppen. Die Winkelteilung der Kontaktplättchen beträgt innerhalb der Gruppen jeweils z.B. 21 Winkelgrade. Drei andere Kontaktplättchen (65) sind aufgrund des Platzbedarfes für die Verschraubung der Plättchenträgerplatte (63) zur Bohrung (64) hin versetzt angeordnet. Die jeweilige Oberseite der Kontaktplättchen (65) liegt ca. 0,1 mm unterhalb der außen liegenden Oberfläche des Deckels (61). Zwischen den Kontaktplättchen (65) und dem Rand der Bohrung (64) befinden sich 12 auf einem Kreis liegende kleinere Lötanschlussbohrungen (66).

Im hohlen Anschlussgehäuse (30) sind die einzelnen Adern und Litzen des in der Kabelklemme (35) gehaltenen Kabelbündels u.a. über die Lötanschlussbohrungen (66) mit den Kontaktplättchen (65) elektrisch leitend verbunden.

In der Explosionszeichnung, nach Figur 2, folgt auf das Anschlussmodul (30) das Verformungsmodul (40). Die Verbindung der beiden Module (30,40) stellt die erste Kombischnittstelle (39) dar.

Das Verformungsmodul (40) besteht im Wesentlichen aus einem Gehäuseoberteil (41), einem Gehäuseunterteil (44) und einer dazwischen liegenden Elastomerschicht (43). Die Elastomerschicht (43) stellt eine nachgiebige Gehäusewandung dar.

Im Verformungsmodul (40) ist beispielsweise ein Kraft-Momenten-Sensor in Speichenbauweise eingebaut. Dieser Sensor besteht aus einem mit Vierkantspeichen versehenen Fußring mit einer zentralen Scheibe, einem Kopfring und vier Vierkantsäulen. Die Vierkantsäulen verbinden die Scheibe mit dem Kopfring. An jeder Säule und jeder Speiche ist je ein Dehnmessstreifenpaar angeordnet. Aus den elastischen Verformungen der Säulen und/oder Speichen können über die Widerstandsänderungen der Dehnmessstreifen die wirkenden Kräfte und Momente bezüglich der Koordinatenachsen ermittelt werden. Der Fußring ist dabei am Gehäuseoberteil (41) befestigt, während der Kopfring am Gehäuseunterteil (44) fixiert ist. Über eine 6 x 8-Matrix-Vektor-Multiplikation werden die vom Sensor abgegebenen Signale in Werte für Kräfte und Momente umgewandelt. Dazu verfügt das Verformungsmodul über einen eigenen Rechenbaustein. Die Rechenwerte werden über die Leitungen und Kontaktstellen der Module des Adaptersystems an die Rechner- und Speichereinheit des Greifers weitergeleitet, um dort die Rechenwerte an die Hebellänge anzupassen, die sich - je nach Aufbau des Adaptersystems - zwischen dem Verformungsmodul (40) und den Greifarmen (89) ergibt.

Das Verformungsmodul (40) hat im Gehäuseoberteil (41) eine positive Adaptergeometrie (42), die an der negativen Adaptergeometrie des das Versorgungsmodul (40) tragenden Moduls zur Anlage kommt. Das Gehäuseunterteil (44) weist eine negative Adaptergeometrie (48) auf, wie sie schon aus dem Anschlussmodul (30) bekannt ist. Ein Großteil der Kontakte der positiven Adaptergeometrie (42) ist zu den Kontaktplättchen der negativen Adaptergeometrie (48) durchgeschleift.

An das Verformungsmodul (40) schließt sich nach den Figuren 2 und 4 ein Kommunikationsmodul (50) an. Die einander zugewandten Adaptergeometrien (48, 55) der Module (40, 50) bilden die zweite Kombischnittstelle (49).

Das Kommunikationsmodul (50) hat ein Kommunikationsgehäuse (51) mit einer zylindrischen Außenwandung. In der Oberseite des Kommunikationsmoduls (50) ist ein ebener Deckel (54) bündig eingelassen. In einer Einsenkung (59) des Deckels (54) ist eine tiefer sitzende Stiftträgerplatte (56) befestigt, vgl. Figur 3. Auf der im Wesentlichen kreisrunden Trägerplatte (56) sitzen 16 Kontaktstifte (57). In die Kontaktstifte (57) sind kleine Schraubenfedern integriert, die einen Kontaktstiftehub von maximal 1,5 mm ermöglichen. Die höchsten Punkte der Kontaktstifte (57) stehen im unbelasteten Zustand über die Oberseite des Deckels (54) ca. 1 mm über. Die Verteilung der Kontaktstifte (57) auf der Stiftträgerplatte (56) entspricht der Verteilung der Kontaktplättchen (65) auf der Plättchenträgerplatte (63). Das Gleiche gilt für die Lötanschlussbohrungen (66).

Die Oberseite des Kommunikationsgehäuses (51) bildet zusammen mit dem Deckel (54) und der Stiftträgerplatte (56) eine positive Adaptergeometrie (38).

Die Adaptergeometrie (38) wird in identischer Bauform auch beim Verformungsmodul (40) und im Bereich der Oberseite des Greifers (80) verwendet. Auch bei diesem Modul werden die meisten Kontaktstifte (57) der positiven Adaptergeometrie (55) zu den Kontaktplättchen (65) der negativen Adaptergeometrie (62) durchgeschleift. Somit werden u.a. auch die Energieversorgungen von der Oberseite zur Unterseite übergeben.

Im Innenraum des Kommunikationsgehäuses (51) ist eine z.B. auf mehreren Platinen (72) aufgebaute Elektronikbaugruppe (71) eingebaut, die über die beiden strom- und signalführenden Schnittstellen über das oder die Nachbarmodule mit dem Greifer (80) und der die Handhabungsvorrichtung (1) steuernden SPS in Verbindung steht. Da der Greifer (80) eine IO-Link-Schnittstelle an Bord hat, jedoch das Robotersystem sehr unterschiedliche Feldbusse benutzt, wird hier ein integrierter "Ethernet to IO-Link"-Adapter benötigt. Die Elektronikbaugruppe (71) stellt einen IO-Link-Master dar, der z.B. vier IO-Link-Kanäle bedient. Zudem sind in der Elerktonikbaugruppe möglichst viele Ethernet-Feldbusprotokolle per Firmware einstellbar. Sie hat auch für die interne Energieversorgung ein eigenes Netzteil. Ferner ist hier auch ein interner Abgriff eines Ethernet-Ports zur Anbindung der Kamera (74) vorhanden.

In den Figuren 2 und 4 weist das Kommunikationsgehäuse (51) seitlich als Kameragehäuse eine zumindest annähernd quaderförmige Ausbuchtung (73) auf. In der Ausbuchtung ist eine Kamera (74) untergebracht. Ihr Kameraobjektiv ist hinter einer Ausnehmung in der Unterseite der Ausbuchtung (73) angeordnet. Die optische Achse des Kameraobjektivs schneidet den zwischen den Greifarmen (89) des Greifers (80) gelegenen Spannraum ca. mittig. Der Sichtbereich der Kamera (74) erfasst somit das zu greifende Werkstück und die Greifarme (89). Um das Kameraobjektiv herum sind an der Unterseite der Ausbuchtung (73) z.B. vier Beleuchtungsleuchtdioden (75) angeordnet, die den Spannraum ausleuchten.

Nach Figur 2 ist am Kommunikationsmodul (50) der Greifer (80) als letztes Glied der Kinematikkette angedockt. Die Andockstelle bildet die dritte Kombischnittstelle (79).

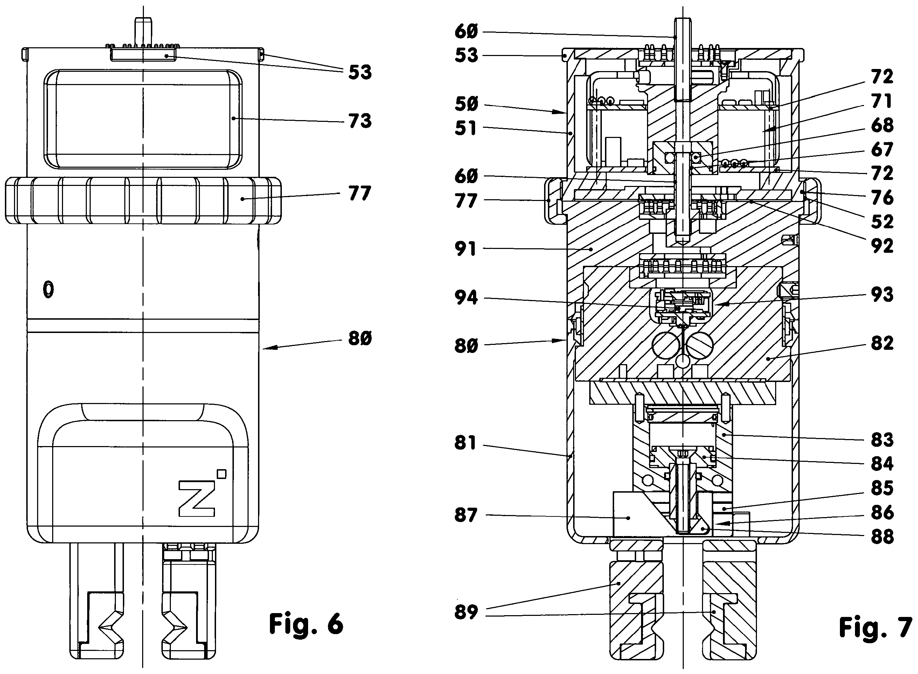

In Figur 7 ist der Greifer (80) zusammen mit dem Kommunikationsmodul (50) im Längsschnitt dargestellt. Danach besteht der Greifer (80) aus einem Elektronikteil und einem Mechanikteil. Über das Basisgehäuse (91) ist der Greifer am Kommunikationsmodul (50) befestigt. Dabei liegt ein positives Basisadapterelement (92), das baulich vergleichbar mit den positiven Adaptergeometrien (42) und (54) ist, an der negativen Adaptergeometrie (62) des Kommunikationsmoduls (50) an.

Um die Module (30, 40, 50) und den Greifer (80) sicher, einfach und schnell miteinander verbinden zu können, sind in Figur 7 das Modul (50) und der Greifer (80) über einen Bajonettverschluss mechanisch gekuppelt. Dazu sind am jeweiligen Modulgehäuse (31, 41, 51) und am Greifergehäuse (81) im Randbereich der jeweiligen positiven Adaptergeometrie mehrere am Umfang verteilte Bajonettzungen (53) angeordnet, vgl. Figur 6.

Ferner weist jedes Modulgehäuse (31, 41, 51) im Randbereich der jeweiligen negativen Adaptergeometrie an der Gehäuseaußenwandung einen Bund (76) auf, in den ein Feingewinde (82) eingearbeitet ist. Auf das Feingewinde ist ein Bajonettring (77) aufgeschraubt. Der Bajonettring (77) hat an seiner Unterseite einen umlaufenden Bajonettsteg, der mindestens so viel Unterbrechungen entlang dem Umfang hat, wie die Modulgehäuse (31, 41, 51) Bajonettzungen (53) aufweisen.

Um die Modulgehäuse (31, 41, 51) miteinander zu verbinden, werden die positiven und die negativen Adaptergeometrien der zu verbindenden Module aneinander gelegt, wobei die Bajonettzungen (53) die Unterbrechungen des Bajonettrings (77) mit Spiel passieren. Durch ein Verschrauben des Bajonettrings (77) legt sich der Bajonettsteg an den Bajonettzungen (53) radial an, wodurch die Modulgehäuse (31, 41, 51) durch das Feingewinde gegeneinander gezogen werden. Um eine definierte Haltekraft vorzugeben, kann der Bajonettring (77) einen Verdrehanschlag aufweisen.

Nach dem Festdrehen des Bajonettrings (77) sind die Module (30, 40, 50) sowie der Greifer (80) formsteif - ohne Verwendung eines Werkzeugs - per Handkraft miteinander verbunden. Hierbei werden zwischen den einander kontaktierenden Adaptergeometrien alle elektrischen Kontakte hergestellt.

Beim Kuppeln nach den Figuren 6 und 7 werden die Module auch pneumatisch miteinander verbunden. Dazu taucht jeweils ein in der jeweiligen positiven Adaptergeometrie eingebautes Zulaufrohr (60) zentrierend in eine hinter der negativen Adaptergeometrie angeordnete Zulaufbohrung (67), vgl. Figur 7. In der Zulaufbohrung (67) ist ein Dichtring (68) angeordnet.

Ggf. sind die Module (30, 40, 50) sowie der Greifer (80) mit einer Passstift-Passbohrungskombination gegen ein gegenseitiges Verdrehen um die Mittellinie (16) gesichert.

Eine alternative Methode zur Verbindung der Module ist in den Figuren 4 und 6 dargestellt. Dort stehen von den positiven Adaptergeometrien pro Modul jeweils drei Laschen (46) senkrecht parallel zur Mittellinie (16) ab, die bei einem Kontaktieren der Module in entsprechende langlochförmige Laschenausnehmungen (46) des jeweiligen Nachbarmoduls hineinragen. Jede Lasche (45) weist eine Gewindebohrung auf. Im Nachbarmodul befindet sich im Bereich der einzelnen Laschenausnehmungen (46) jeweils eine radiale Senkbohrung (69). Zur gegenseitigen Fixierung der Module wird in die jeweilige Senkbohrung (69) eine Schraube (47) eingesetzt, die in der jeweiligen Gewindebohrung der einzelnen Lasche (45) festgeschraubt wird.

Im Greifer (80) schließt sich an das Basisgehäuse (91) das Greifergehäuse (81) an, das im Basisgehäuse (91) über einen Trageinschub (82) montiert ist. Der Trageinschub (82) fixiert das Greifergehäuse (81) mittels eines Hintergriffs.

Im Greifergehäuse (81) ist nur beispielhaft eine Zylinder-Kolben-Einheit (83, 84) als Verstellantrieb der Greifarme (89) angeordnet. Der Zylinder (83) der Zylinder-Kolben-Einheit ist mittig am Trageinschub (82) befestigt. Am Boden des Zylinders (83), der einen Durchbruch für die Kolbenstange des im Zylinder (83) geführten Kolbens (84) aufweist, ist eine Führungsschiene (85) zur Führung zweier nebeneinander verfahrbarer Schlitten (87) angeordnet. Jeder Schlitten (87) trägt einen Greifarm (89).

Der Kolben (84) bewegt die Schlitten (87) mithilfe eines Keilhakengetriebes (86). Dazu sind an der Kolbenstange zwei Keilhaken (88) befestigt. Je ein Keilhaken (88) greift in eine schräg verlaufende Nut eines Schlittens (87) ein. Bei jeder Hubbewegung der Kolbenstange werden die Schlitten (87) quer dazu zwangsgeführt bewegt. Mithilfe von mindestens zwei Sensoren sind die Endlagen des Kolbens (84) editierbar. Gegebenenfalls messen Drucksensoren an den Keilhaken (88) die an den Greifarmen (89) anliegenden Klemmkräfte beim Halten von Werkstücken.

Des Weiteren kann im Basisgehäuse (91) mindestens ein Pneumatikventil angeordnet sein, um elektronisch gesteuert den Druckräumen des Zylinders (83) Druckluft zuzuführen oder diese abzublasen.

Anstelle des in Figur 7 dargestellten Greifers werden oft Greifer mit elektromechanischem Antrieb eingesetzt, vgl. Parallelgreifer der DE 10 2015 012 779 A1.

In das Gehäuse eines solchen Greifers ist ein vollwertiger Servoregler, bzw. Servoachsregler, zusammen mit einem dazugehörigen Rechner- und Speichermodul eingebaut. Der Servoregler wird werkseitig so programmiert, dass der Endnutzer, bzw. der Maschinenbediener, keine besonderen Fachkenntnisse benötigt, um die Greifvorrichtung auf die entsprechenden Greifgüter bzw. Werkstücke einzustellen. Dabei können die Greifgüter sowohl formsteif als auch elastisch sein.

Neben den einfachen Parametern, wie z.B. dem Greifhub und dem elastizitäts- und greifweitenabhängigen Greifhubzuschlag, können im Rechner- und Speichermodul für bestimmte, z.B. kundenspezifische Greifgüter spezielle katalogisierte Greifrezepturen abgelegt sein, die vom Maschinenbediener über eine Greifgutnummer aufgerufen werden können. Auf diese Weise ist ein schnelles Umstellen zwischen zwei verschiedenen bekannten Greifaufgaben möglich.

Hierzu sitzt der Servoregler und das dazugehörige Rechner- und Speichermodul direkt im Gehäuse des Greifers. Alle greifvorrichtungsspezifischen Werte und Reglereinstellungen werden direkt in der Greifvorrichtungssoftware herstellerseitig einprogrammiert. Die Greifrezepturen für neue Greifaufgaben werden vom kundenseitigen Maschinenbediener handgesteuert angelernt und in dem vorrichtungsseitigen Rechner- und Speichermodul direkt und dauerhaft, z.B. zusammen mit einer neuen Greifgutnummer, abgespeichert. Als neue Greifgutnummer wird entweder die nächste freie Nummer automatisch gewählt oder sie wird numerisch über die SPS-Eingabetastatur eingegeben. Auch andere Einricht- oder Anlernvorgänge werden in der Regel über diese Tastatur vorgegeben.

Die vom Maschinenbediener eingebenen greifgutnummerabhängigen Datensätze lassen sich ändern oder löschen, ohne dass hierzu in die werkzeugmaschinenseitige speicherprogrammierbare Steuerung eingegriffen werden muss.

Im greifvorrichtungseigenen Rechner- und Speichermodul sind optional Mess- und Auswertealgorithmen einprogrammiert, die während der üblichen Greiffunktion auch Umfeldparameter wie Gehäusetemperatur, Gehäuseschwingungen, Körperschall u.s.w. messen und protokollieren können. Diese Daten werden in eine Verschleißstatistik umgesetzt, um hieraus den Zeitpunkt der nächsten Wartung oder Vorrichtungsüberholung zu ermitteln und das Erreichen dieses Zeitpunkts beispielsweise an der Vorrichtung z.B. akustisch oder optisch anzuzeigen. Auch können die Umfeldparameter und/oder ihre Auswertung und Interpretation vom Rechner- und Speichermodul über die greifvorrichtungseigene Datenschnittstelle, also das Kommunikationsmodul (50), zurück an die speicherprogrammierbare Steuerung der Handhabungsvorrichtung (1) bzw. der Anlage übermittelt werden.

Am Greifergehäuse (81) sind nach Figur 2 zwei resistive Kraftaufnehmer jeweils in Form eines FSR-Sensors (96) angeordnet. Mithilfe dieser Sensoren kann der Greifer (80) vor Ort durch den Maschinenbediener geöffnet oder geschlossen werden.

### Bezugszeichenliste:

- 1: Handhabungsvorrichtung, Gelenkroboter, 6-Achs-Roboter
- 2: Grundplatte
- 3: A-Achse
- 4: Drehtisch, erstes Glied
- 5: B-Achse
- 6: Fußhebel
- 7: C-Achse
- 8: Kniehebel
- 11: D-Achse
- 12: Tragarm
- 13: E-Achse
- 14: Handhebel
- 15: Glied, vorletztes; Drehteller
- 16: F-Achse, Schwenkachse, Mittellinie

- 19: Adaptersystem (Summe der Module)

- 20: Mechanikmodul, erstes Systemmodul
- 21: Basismodulgehäuse
- 22: Vierkantzapfen
- 23: Zentriersenkung
- 24: Zentrierzapfen
- 25: Durchgangsbohrung
- 29: Mechanikschnittstelle

- 30: Anschlussmodul, zweites Systemmodul
- 31: Anschlussgehäuse, Modulgehäuse
- 32: Zentrierbund
- 33: Passstiftbohrung
- 34: Reduzierkegelstumpf
- 35: Kabelklemme
- 36: Zulaufrohr, großer Durchmesser
- 38: negative Adaptergeometrie
- 39: erste Kombischnittstelle

- 40: Verformungsmodul, viertes Modul
- 41: Gehäuseoberteil, Modulgehäuse
- 42: positive Adaptergeometrie
- 43: Elastomerschicht
- 44: Gehäuseunterteil
- 45: Laschen
- 46: Laschenausnehmung, langlochförmig
- 47: Schraube
- 48: negative Adaptergeometrie
- 49: zweite Kombischnittstelle

- 50: Kommunikationsmodul, drittes Modul
- 51: Kommunikationsgehäuse, Modulgehäuse
- 52: Außengewinde im Bereich der negativen Adaptergeometrie
- 53: Bajonettzungen, Teil des Bajonettspannsystems
- 54: Deckel, oben
- 55: positive Adaptergeometrie
- 56: Stiftträgerplatte
- 57: Kontaktstifte, Übergabestellen für elektrische Energie und Signale
- 58: Lötanschlussbohrungen
- 59: Einsenkung für (56) in (51)
- 60: Zulaufrohr, Übergabestelle für Druckluft oder Gas

- 61: Deckel, unten
- 62: negative Adaptergeometrie
- 63: Plättchenträgerplatte
- 64: Bohrung, zentral
- 65: Kontaktplättchen, Übergabestellen für elektrische Energie und Signale
- 66: Lötanschlussbohrungen
- 67: Zulaufbohrung, Übergabestelle für Druckluft oder Gas
- 68: Dichtring
- 69: Senkbohrung für (47)

- 71: Elektronikbaugruppe, ggf. austauschbar
- 72: Platinen, bestückt
- 73: Ausbuchtung; Kameragehäuse, optional
- 74: Kamera, optional
- 75: Beleuchtungsleuchtdioden, optional
- 76: Bund mit Feingewinde
- 77: Bajonettring, außen eingekerbt, Teil des Bajonettspannsystems
- 79: dritte Kombischnittstelle, Teil des Bajonettspannsystems

- 80: Glied, letztes; Greifer
- 81: Greifergehäuse
- 82: Trageinschub
- 83: Zylinder
- 84: Kolben, Pneumatikkolben
- 85: Führungsschiene
- 86: Keilhakengetriebe
- 87: Schlitten
- 88: Keilhaken
- 89: Greifarme

- 91: Basisgehäuse
- 92: Basisadapterelement, positiv
- 93: Elektronik
- 94: Rechner- und Speichermodul
- 96: FSR-Sensoren

## Patentansprüche

1. Adaptersystem zur Anbindung des letzten Gliedes (80) einer kinematischen Kette einer Handhabungsvorrichtung (1) an diese, wobei das letzte Glied (80) ein Rechner- und Speichermodul (94) sowie mindestens einen Aktor (83, 84) und/oder mindestens einen Sensor aufweist,
- wobei zwischen dem vorletzten (15) und dem letzten Glied (80) der kinematischen Kette mindestens drei nacheinander positionierte Systemmodule (20, 30, 50) angeordnet sind,
- wobei ein erstes Systemmodul (20) ein an das vorletzte Glied (15) mechanisch angepasstes Mechanikmodul ist, wobei zwischen einem zweiten Systemmodul (30) und dem letzten Glied (80) mindestens ein weiteres Systemmodul (50) angeordnet ist,
**dadurch gekennzeichnet,**
- **dass** elektrische und/oder pneumatische Verbindungsleitungen durch das erste Systemmodul (20) geführt sind,
- **dass** im zweiten Systemmodul (30) die elektrischen und/oder pneumatischen Verbindungsleitungen mit Übergabestellen (65) einer negativen Adaptergeometrie (38) einer mechatronischen Kombischnittstelle (39) verbunden sind,
- **dass** jedes weitere Systemmodul (40 , 50) zur Verbindung mit einem vorherigen Systemmodul eine positive Adaptergeometrie und zur Verbindung mit einem nachfolgenden Systemmodul eine negative Adaptergeometrie aufweist,
- **dass** in der einzelnen Kombischnittstelle (39, 49, 79) die einander kontaktierenden negativen und positiven Adaptergeometrien komplementär zueinander ausgestaltet sind,
- **dass** die negativen und die positiven Adaptergeometrien mittels einer Kupplungsvorrichtung gegeneinander verdreh- und verliersicher sowie formsteif verbindbar sind,
- **dass** ein drittes Systemmodul (50) eine Elektronikbaugruppe (71) aufweist, die die mit der vorgegebenen Systemarchitektur auszutauschenden Kommunikationsdaten der ankommenden elektrischen Verbindungsleitungen für die Kommunikation mit der Geräteschnittstelle des letzten Gliedes (80) anpasst oder wandelt und über die entsprechenden Übergabestellen der negativen Adaptergeometrie kommunizierbar zur Verfügung stellt.

2. Adaptersystem gemäß Anspruch 1, **dadurch gekennzeichnet, dass** das letzte Glied (80) der kinematischen Kette ein Greifer ist.

3. Adaptersystem gemäß Anspruch 2, **dadurch gekennzeichnet, dass** das dritte Systemmodul (50) am Modulgehäuse (51) eine Ausbuchtung (73) hat, in der eine Kamera (74) zur Beobachtung des zwischen den Greifarmen (89) gelegenen Raumes angeordnet ist.

4. Adaptersystem gemäß Anspruch 1, **dadurch gekennzeichnet, dass** ein viertes Systemmodul (40) ein Verformungsmodul ist, das die Biegung der Kombination aus mindestens einem Systemmodul und dem letzten Glied (80) in zwei zueinander senkrecht stehende Ebenen misst, wobei die Schnittlinie der beiden Ebenen die Mittellinie (16) der Systemmodule (20, 30, 40, 50) ist.

5. Adaptersystem gemäß Anspruch 1, **dadurch gekennzeichnet, dass** die die Systemmodule (30, 40, 50) verbindende Kupplungsvorrichtung ein Bajonettspannsystem (53, 76, 77) ist, bei dem jedes Systemmodul (30, 40, 50) an einer ersten Stirnseite einen Schraubring (77) mit Hintergriffsstegen und an einer zweiten Stirnseite radial abstehende Bajonettzungen (53) aufweist.

6. Adaptersystem gemäß Anspruch 5, **dadurch gekennzeichnet, dass** das Bajonettspannsystem (53, 76, 77) mit elektronisch überwachbaren Endanschlägen ausgestattet ist, die die Spannstellung detektieren.

7. Adaptersystem gemäß Anspruch 1, **dadurch gekennzeichnet, dass** ein Systemmodul eine positive Adaptergeometrie und zwei oder mehr negative Adaptergeometrien aufweist, wobei die Anschlussebenen der negativen Adaptergeometrien in einer oder mehreren Ebenen liegen.

## Claims

1. An adapter system for connecting the last element (80) of a kinematic chain of a handling device (1) to same, wherein the last element (80) has a computer-storage module (94), as well as at least one actuator (83, 84) and/or at least one sensor,
- wherein at least three sequentially positioned system modules (20, 30, 50) are arranged between the penultimate (15) and the last element (80) of the kinematic chain,
- wherein a first system module (20) is a mechanical module mechanically adapted to the penultimate element (15),
**characterized**
- **in that** electrical and/or pneumatic connection lines are guided via the first system module (20),
- **in that** the electrical and/or pneumatic connection lines in a second system module (30) are connected with transition points (65) of a negative adapter geometry (38) of a mechatronic combi-interface (39),
- **in that** at least one additional system module (50) is arranged between a second system module (30) and the last element (80), and each additional system module (40, 50) has a positive adapter geometry for connecting to a preceding system module and has a negative adapter geometry for connecting to a subsequent system module,
- **in that** the negative and positive adapter geometries making contact with each other in the individual combination interface (39, 49, 79) are designed complementary to each other,
- **in that** the negative and the positive adapter geometries can be connected to each other by means of a coupling device such that they are rigid and are secured against rotation and loss,
- **in that** a third system module (50) has an electronic assembly (71) which adapts or converts the communication data of the incoming electrical connection lines to be exchanged with the predefined system architecture for communicating with the device interface of the last element (80), and provides said data in a communicable form via the corresponding transition points of the negative adapter geometry.

2. The adapter system according to claim 1, **characterized in that** the last element (80) of the kinematic chain is a gripping element.

3. The adapter system according to claim 2, **characterized in that** the third system module (50) has a bulge (73) on the module housing (51) in which a camera (74) is arranged for observing the space located between the gripping arms (89).

4. The adapter system according to claim 1, **characterized in that** a fourth system module (40) is a deformation module, which measures the bend of the combination of at least one system module and the last element (80) in two planes that are oriented perpendicular to each other, wherein the section line of the two planes is the centre line (16) of the system modules (20, 30, 40, 50) .

5. The adapter system according to claim 1, **characterized in that** the coupling device connecting the system modules (30, 40, 50) is a bayonet clamping system (53, 76, 77), in which each system module (30, 40, 50) has a screw ring (77) with rear engaging elements on a first end side and radially protruding bayonet tabs (53) on a second end side.

6. The adapter system according to claim 5, **characterized in that** the bayonet clamping system (53, 76, 77) is equipped with electronically monitorable end stops which detect the clamping position.

7. The adapter system according to claim 1, **characterized in that** a system module has a positive adapter geometry and two or more negative adapter geometries, wherein the connection planes of the negative adapter geometries are located in one or more planes.

## Revendications

1. Système adaptateur, destiné à rattacher le dernier organe (80) d'une chaîne cinématique d'un dispositif de manipulation (1) à celle-ci, le dernier organe (80) comportant un module de calcul et de mémoire (94), ainsi qu'au moins un actionneur (83, 84) et/ou au moins un capteur,
- entre l'avant-dernier (15) et le dernier organe (80) de la chaîne cinématique étant placés au moins trois modules de système (20, 30, 50) positionnés l'un derrière l'autre,
- un premier module de système (20) étant un module mécanique mécaniquement adapté à l'avant-dernier organe (15),
**caractérisé**
- **en ce que** des lignes de connexion électriques et/ou pneumatiques sont tirées à travers le premier module de système (20),
- **en ce que** dans le deuxième module de système (30), les lignes de connexion électriques et/ou pneumatiques sont connectées sur des points de transfert (65) d'une géométrie négative d'adaptation (38) d'une interface mixte (39) mécatronique,
- **en ce qu'**entre un deuxième module de système (30) et le dernier organe (80) est placé au moins un module de système (50) supplémentaire, pour la connexion sur un module de système précédent, chaque module de système (40, 50) supplémentaire comporte une géométrie d'adaptation positive et pour la connexion sur un module de système suivant, comporte une géométrie d'adaptation négative,
- **en ce que** dans l'interface mixte (39, 49, 79) individuelle, les géométries d'adaptation négatives et positives qui sont en contact mutuel sont conçues de sorte à être complémentaires les unes des autres,
- **en ce que** les géométries d'adaptation négatives et les positives sont susceptibles d'être assemblées en étant solidaires en rotation et imperdables, ainsi que de manière indéformable au moyen d'un dispositif de couplage,
- **en ce qu'**un troisième module de système (50) comporte un ensemble électronique (71) qui adapte ou convertit les données de communication qui doivent être échangées avec l'architecture de système prédéfinie des lignes de connexion électriques entrantes pour la communication avec l'interface d'appareil du dernier organe (80) et les met à disposition de manière communicable par l'intermédiaire des points de transfert correspondants de la géométrie d'adaptation négative.

2. Système adaptateur selon la revendication 1, **caractérisé en ce que** le dernier organe (80) de la chaîne cinématique est un grappin.

3. Système adaptateur selon la revendication 2, **caractérisé en ce que** sur le boîtier de module (51), le troisième module de système (50) possède une convexité (73), dans laquelle est placée une caméra (74), destinée à observer l'espace situé entre les bras de préhension (89) .

4. Système adaptateur selon la revendication 1, **caractérisé en ce qu'**un quatrième module de système (40) est un module de déformation, qui mesure la flexion de l'association d'au moins un module de système et du dernier organe (80) dans deux plans perpendiculaires l'un par rapport à l'autre, l'intersection des deux plans étant la ligne médiane (16) des modules de système (20, 30, 40, 50).

5. Système adaptateur selon la revendication 1, **caractérisé en ce que** le dispositif de couplage assemblant les modules de système (30, 40, 50) est un système de serrage à baïonnette (53, 76, 77), sur lequel chaque module de système (30, 40, 50) comporte sur une première face frontale une bague filetée (77) avec des barrettes d'engagement arrière et sur une deuxième face frontale, des languettes de baïonnette (53) débordant en direction radiale.

6. Système adaptateur selon la revendication 5, **caractérisé en ce que** le système de serrage à baïonnette (53, 76, 77) est équipée de butées finales électroniquement supervisables, qui détectent la position de serrage.

7. Système adaptateur selon la revendication 1, **caractérisé en ce qu'**un module de système comporte une géométrie d'adaptation positive et deux géométries d'adaptation négatives ou plus, les plans de raccordement des géométries d'adaptation négatives se situant dans un ou dans plusieurs plans.
